(19) Europäisches Patentamt

European Patent Office

Office européen des brevets

(11) Veröffentlichungsnummer: **0 311 830 B1**

(12) **EUROPÄISCHE PATENTSCHRIFT**

(45) Veröffentlichungstag der Patentschrift: **25.11.92**

(21) Anmeldenummer: **88115797.8**

(22) Anmeldetag: **26.09.88**

(51) Int. Cl.⁵: **B65B 35/44**, B65B 57/10, B65G 47/08

(54) **Verfahren und Vorrichtung zum gruppenweisen Verpacken von Einzelpackungen.**

(30) Priorität: **16.10.87 DE 3735040**

(43) Veröffentlichungstag der Anmeldung:
**19.04.89 Patentblatt 89/16**

(45) Bekanntmachung des Hinweises auf die
Patenterteilung:
**25.11.92 Patentblatt 92/48**

(84) Benannte Vertragsstaaten:
**DE GB IT**

(56) Entgegenhaltungen:
EP-A- 0 168 548      CH-A- 418 959
FR-A- 2 494 217      GB-A- 1 212 407
GB-A- 2 051 014      US-A- 3 040 862
US-A- 3 300 946      US-A- 3 424 293

(73) Patentinhaber: **KÖRBER AG**
**Kampchaussee 8-32 Postfach 80 04 60**
**W-2050 Hamburg 80(DE)**

(72) Erfinder: **Bergner, Herbert**
**Kirchenallee 4**
**W-2057 Reinbek(DE)**
Erfinder: **Blidung, Otto**
**Drosselgasse 24**
**W-2054 Geesthacht(DE)**

**Beschreibung**

Die Erfindung betrifft ein Verfahren zum gruppenweisen Verpakken von Einzelpackungen, insbesondere von Zigarettenpackungen gemäß dem Oberbegriff des Anspruchs 1.

Die Erfindung bezieht sich außerdem auf eine Vorrichtung zum gruppenweisen Verpacken von Einzelpackungen, insbesondere von Zigarettenpakkungen gemäß dem Oberbegriff des Anspruchs 5.

Es ist bereits bekannt, Gruppen von Einzelpakkungen, sogenannte Stangen, als Großpackung zu verpacken. Üblicherweise werden dabei die Einzelpackungen, nachdem sie eine Siegelstrecke durchlaufen haben und fertiggestellt sind, entlang einer Förderstrecke mittels zu beiden Seiten der Einzelpackungen angreifender Förderbänder transportiert, wobei sich ein Packungsstau vor dem sogenannten Stangenpacker bildet. Eine definierte Anzahl der angestauten Einzelpackungen werden jeweils in den Stangenpacker eingeschoben und als Packungsgruppe (Stange) verpackt. Bei der Zufuhr der Einzelpackungen liegen üblicherweise jeweils zwei Einzelpackungen übereinander.

Verfahren und Vorrichtung der eingangs erwähnten Art sind aus der CH-PS 418 959 bekannt. Dort werden Einzelpackungen in einer Reihe einer in einer Kammer eines schrittweise weiterschaltenden Kammernförderers liegenden Gruppenbildungsstation zugeführt. Beim Weiterschalten des Kammernförderers werden die vordersten Packungen der Reihe als Packungsgruppe separiert und in eine benachbarte Überführungsposition gefördert, aus der sie dann unmittelbar in eine Packmaschine abgegeben werden. Diese strenge Kopplung der aufeinanderfolgenden Förderschritte erfordert in der Verbindung zwischen der die Packungen herstellenden Maschine und der Packmaschine eine Staustrecke, die Kapazitätsdifferenzen der Maschine ausgleicht. Diese Staustrekke ist der Gruppenbildungsstation vorgeordnet.

Ein anderes Förderprinzip für das Zusammenführen von Verpackungen und Füllgut ist aus der US-PS 3 300 046 bekannt. Hiernach werden auf einem Kammernband Füllgutbeutel zu einer Füllstation gefördert. In einer parallelen Förderstrecke werden in einem zweiten Kammernband Kartons herangeführt, in welche die Füllgutbeutel durch Querverschieben überführt werden. Hierbei geht es nicht um das Ansammeln von Einzelpackungen in Gruppen und das Verpacken der Gruppen.

Der Erfindung liegt die Aufgabe zugrunde, das gruppenweise Verpacken von Einzelpackungen weiter zu verbessern und insbesondere eine flexible Kopplung einer Packungen herstellenden und einer Packungsgruppen verpackenden Maschine zu ermöglichen.

Bei einem Verfahren der eingangs genannten Art wird diese Aufgabe erfindungsgemäß dadurch gelöst, daß komplette Packungsgruppen mit einem ersten Förderschritt aus der Gruppenbildungsstation zunächst in eine Zwischenposition gefördert werden, daß sie mit einem zweiten Förderschritt aus der Zwischenposition der Überführungsposition zugeführt werden und daß sie aus der Überführungsposition in die Verpackungsmaschine übergeben werden. Merkmale von Weiterbildungen und vorteilhaften Ausgestaltungen des erfindungsgemäß vorgeschlagenen Verfahrens sind in den Unteransprüchen 2 bis 4 enthalten.

Bei einer Vorrichtung der eingangs genannten Art wird die der Erfindung zugrundeliegende Aufgabe erfindungsgemäß dadurch gelöst, daß ein zweiter intermittierend verlaufender Förderer mit Aufnahmekammern für Packungsgruppen vorgesehen ist, daß die Förderbahnen der beiden Förderer sich kreuzen und daß sich jeweils eine Kammer des einen Förderers in eine Kammer des anderen, zur Zeit in Ruhe befindlichen Förderers bewegt, wobei der zweite Förderer die Packungsgruppe vom ersten Förderer übernimmt und zur Überführungsstation fördert. Merkmale von Weiterbildungen und vorteilhaften Ausgestaltungen der erfindungsgemäß vorgeschlagenen Vorrichtung sind in den Unteransprüchen 6 bis 18 angegeben.

Mit der Erfindung wird eine einwandfreie Bildung von Packungsgruppen mit einer definierten Formation erreicht, d.h., das gegenseitige Verrutschen der über- und nebeneinanderliegenden Einzelpackungen wird vermieden. Die Packungsgruppen werden unter Beibehalten ihrer Formation der sie verpackenden Maschine (Stangenpacker) zugeführt. Diese quasi gefesselte Übergabe der Packungsgruppen wird durch die sich kreuzenden Förderbahnen der beiden Kammernbänder erreicht. Die erfindungsgemäße Vorrichtung stellt ein Zwischenglied zwischen dem Stangenpacker und der die fertige Einzelpackungen abgebenden Einschlagmaschine dar, welches eine starre Kopplung zwischen diesen beiden Maschinen vermeidet. Das bedeutet, daß Leistungsdifferenzen der die Einzelpackungen abgebenden Maschine und der Packmaschine kompensiert werden können und daß bei einem Stillstand der Einschlagmaschine der Stangenpacker weiterlaufen und alle noch vorhandenen Packungsgruppen verpacken kann. Dadurch werden auch Fehlpackungen (Fehlstangen) vermieden, die sonst bei einer Unterbrechung des Stangenpakkertaktes durch vorzeitiges Abtrocknen der Leimkanten noch nicht geschlossener Verpackungen entstehen könnten. Auch die Unterbrechung der Blankettzufuhr zur Packmaschine für den Fall, daß mit einem Förderhub des zweiten Klammernförderers keine Packungsgruppe in die Überführungsposition gelangt (Leerhub), verbessert die Funktionsfähigkeit der Vorrichtung in sehr vorteilhafter Weise.

Die Erfindung soll nachstehend an einem Ausführungsbeispiel näher erläutert werden.

In den Zeichnungen zeigen:

Figur 1      eine Seitenansicht der Vorrichtung in schematischer Darstellung,

Figur 2      die Draufsicht nach Figur 1 mit einem teilweisen Schnitt des Querförderers im Füll- und Übergabebereich und

Figur 3      eine Ansicht gemäß Schnitt A-A nach Figur 1.

Die erfindungsgemäße Vorrichtung stellt ein Zwischenglied zwischen einer Einschlagmaschine 1 für die Herstellung von Einzelpackungen 2, z. B. Zigarettenpackungen, und einem Stangenpacker 3 zum Verpacken von Gruppen 4 (Stangen) dieser Einzelpackungen 2 dar.

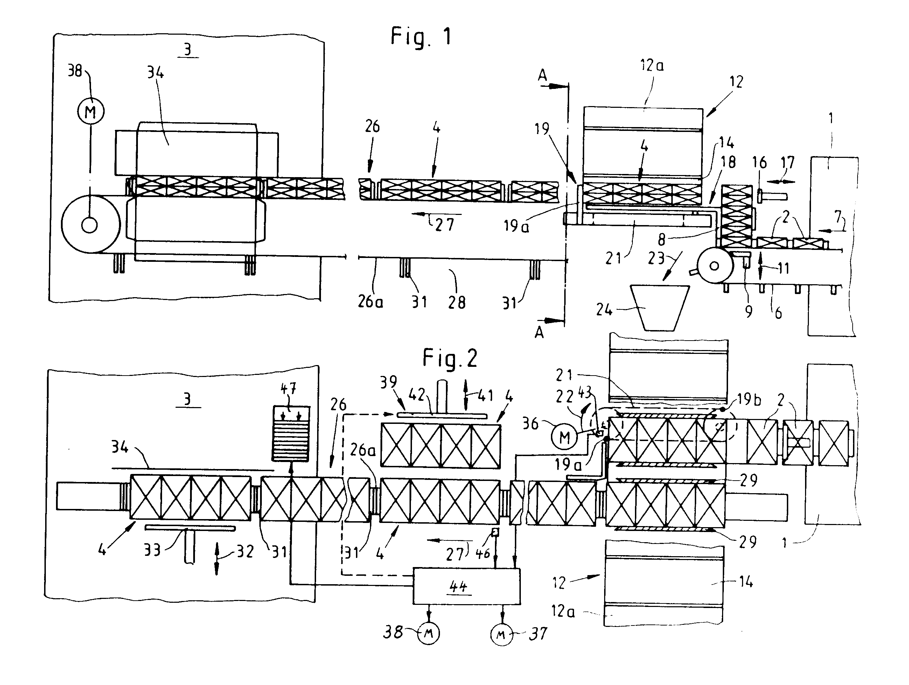

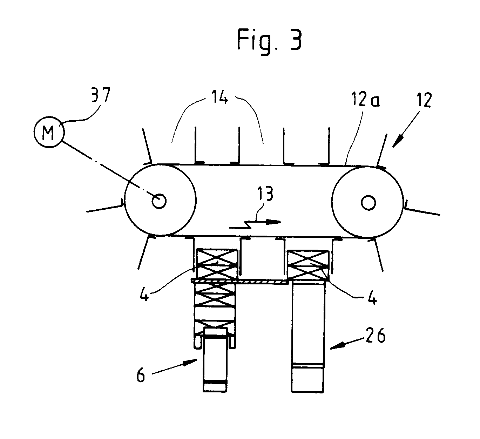

Mittels eines Kammernbandes 6 werden die in der Einschlagmaschine 1 fertiggestellten Einzelpackungen 2 in Richtung des Pfeiles 7 zugeführt. Am Ende des Kammernbandes 6 befindet sich ein senkrecht über diesem angeordneter Packungsturm 8. Es ist ein Hubelement 9 vorgesehen, welches in Richtung des Doppelpfeiles 11 auf und ab bewegbar ausgebildet ist und die Einzelpackungen 2 aus dem Kammernband 6 heraus in den Packungsturm 8 hebt. Stromab nach dem Kammernband 6 und dem Packungsturm 8 ist ein quer zur Zuführrichtung der Einzelpackungen 2 intermittierend umlaufender Förderer 12 angeordnet. Dieser Förderer 12 ist als Kammernband 12a ausgebildet, wie insbesondere in der Figur 3 gut erkennbar ist, worin der Pfeil 13 die Umlaufrichtung anzeigt. Das Kammernband 12a besteht aus einer Anzahl von Kammern 14 zur Aufnahme jeweils einer Gruppe 4 von Einzelpackungen 2. Wie in den Figuren 1 und 2 sichtbar ist, werden jeweils in eine Kammer 14 des Kammernbandes 12a viermal zwei übereinanderliegende Einzelpackungen 2 eingeschoben. Überlicherweise besteht aber bei der Zigarettenverpackung eine Stange aus fünfmal zwei übereinanderliegenden Einzelpackungen, wobei jedoch die hier zu beschreibende Art der Gruppenbildung in den Kammern 14 prinzipiell dieselbe ist.

Das Einbringen der Einzelpackungen 2 in die Kammern 14 erfolgt mittels eines Schiebers 16, der in Richtung des Doppelpfeiles 17 hin- und herbewegbar ist und mit jedem Schub zwei übereinanderliegende Einzelpackungen 2 aus dem Packungsturm 8 entlang einer Gleitbahn 18 in die bereitstehende Kammer 14 einschiebt, bis diese mit einer kompletten Gruppe 4 gefüllt ist. Um beim Füllen der Kammern 14 ein gegenseitiges Verschieben der Einzelpackungen 2 zu vermeiden, sind Abstützmittel 19 vorgesehen. Diese umfassen zwei Anschläge 19a, 19b, welche in einem Abstand an einem angetriebenen Zahnriemen 21 befestigt sind. Einer der Anschläge 19a bzw. 19b wird zu Beginn des Füllens einer Kammer 14 vor die ersten einzuschiebenden, übereinanderliegenden Einzelpackungen 2 in Position gebracht. Mit jedem weiteren Packungseinschub bewegt sich dieser Anschlag etwa synchron zur Einschubbewegung des Schiebers 16 um jeweils eine Packungsbreite in Schubrichtung der eingeschobenen Packungen. Nach Beenden des Einschiebens, d. h. wenn die Kammer 14 mit einer kompletten Packungsgruppe 4 gefüllt ist, wird der andere Anschlag 19a bzw. 19b durch einen auszuführenden Zwischenhub des Zahnriemens 21 vor dem Anfang der nächsten einzuschiebenden Packungsgruppe 4 positioniert. In der Figur 2 ist hierzu erkennbar, daß der Anschlag 19a für den vorangegangenen abgeschlossenen Füllvorgang das aktive Abstützmittel war, während der Anschlag 19b nun für den Füllvorgang der nächsten Kammer 14 als Abstützmittel in Position zu bringen ist. Der Pfeil 22 gibt die Laufrichtung des Zahnriemens 21 mit den beiden Anschlägen 19a, 19b an. Die beschriebenen Abstützmittel 19 gewährleisten somit eine einwandfreie Formation der Pakkungsgruppen 4 in den Kammern 14.

Um fehlerhafte Einzelpackungen 2 auszuwerfen, bevor sie in den Packungsturm 8 gelangen könnten, ist das Hubelement 9 in seiner abgesenkten Position vorübergehend stillsetzbar, so daß solche fehlerhafte Packungen mittels des eingangs genannten Kammernbandes 6 unter dem Packungsturm 8 hindurch weitergefördert werden und in Richtung des Pfeiles 23 in einen Auffangbehälter 24 gelangen.

Zum Weitertransport einer in einer Kammer 14 gebildeten Packungsgruppe 4 läuft das querfördernde Kammernband 12a nun einen Takt weiter und übergibt diese Packungsgruppe 4 an einen weiteren Förderer 26, der ebenfalls als Kammernband 26a ausgebildet ist. Dieses Kammernband 26a weist eine rechtwinklig zur Förderrichtung des querlaufenden Kammernbandes 12a gerichtete Förderrichtung auf und läuft intermittierend in Richtung des Pfeiles 27 um. Die Förderbahnen der beiden Kammernbänder 12a und 26a kreuzen sich also, so daß eine Übergabe einer Packungsgruppe 4 aus einer Kammer 14 des querfördernden Kammernbandes 12a in eine Kammer 28 des längsfördernden Kammernbandes 26a möglich ist. Die Kammern 14 des Kammernbandes 12a sind durch Wände 29 entlang der beiden Längsseiten der Packungsgruppen 4 und die Kammern 28 durch Wände 31 entlang der beiden Stirnseiten der Pakkungsgruppen 4 gebildet. Mittels des längsfördernden Kammernbandes 26a werden die Packungsgruppen 4 in den Kammern 28 dem Stangenpacker 3 zur Verpackung zugeführt. Die Packungsgruppen 4 behalten also von ihrer Bildung in den Kammern 14 des Kammernbandes 12a bis zur Übergabe zur Verpackung im Stangenpacker 3 ihre Formation exakt bei. Im Stangenpacker 3 wird die jeweils durch das Kammernband 26a zugeführte Pakkungsgruppe 4 mittels eines in Richtung des Doppelpfeiles 32 hin- und herbewegbaren Schiebers 33 aus der Kammer 28 heraus gegen ein Blankett 34 geschoben, welches über eine Blankettzuführeinrichtung 47, die hier in Fig. 2 nur schematisch angedeutet wurde, zugeführt wird. In der US-PS 4 653 248 der Anmelderin ist ein Stangenpacker mit einer solchen Blankettzuführung gezeigt. Das Blankett 34 wird in üblicher Weise mittels hier nicht gezeigter Faltorgane des Stangenpackers 3 um die Packungsgruppe 4 zu einer geschlossenen Verpakkung gefaltet.

Der Antrieb des die Einzelpackungen 2 zuführenden Kammernbandes 6, des Hubelementes 9 und des Schiebers 16 erfolgt vorzugsweise über in der Zeichnung nicht dargestellte Kurventriebe vom Einschlagmaschinenantrieb aus. Für den Antrieb des mit den beiden Anschlägen 19a, 19b versehenen Zahnriemens 21 ist ein eigener Antriebsmotor 36 vorgesehen, der, wie bereits erwähnt, eine Synchronbewegung zur Bewegung des Schiebers 16 ausführt.Wenn keine Einzelpackungen 2 aus dem Packungsturm 8 in die Kammer 14 des Kammernbandes 12a geschoben werden, steht auch der Zahnriemenantrieb 36 still. Für den Quertransport der Packungsgruppen 4, das Kammernband 12a, sowie für den Längstransport, das Kammernband 26a, sind jeweils eigene Antriebsmotoren 37 bzw. 38 vorgesehen. An der Förderstrecke des Kammernbandes 26a kann eine Nachlegestation 39 vorgesehen sein, um von Hand oder automatisch eine komplette Packungsgruppe 4 in eine Leerkammer des Kammernbandes 26a einzuschieben. Das Einschieben der Packungsgruppe 4 kann dabei mittels eines in Richtung des Doppelpfeiles 41 bewegbaren Einschiebers 42 erfolgen.

Im folgenden sollen noch einige weitere Ausführungen zur Funktions- und Arbeitsweise der Vorrichtung gemacht werden.

Der Stangenpacker 3 ist so ausgelegt, daß seine Leistung (Packungen pro Minute) größer ist als die Leistung der Einschlagmaschine 1. Der Stangenpacker 3 läuft mit einer konstanten Geschwindigkeit, während die Einschlagmaschine 1 mit unterschiedlicher Geschwindigkeit läuft. Werden nun von der Einschlagmaschine 1 weniger Einzelpackungen 2 zugeführt, so daß im querfördernden Kammernband 12a innerhalb eines Taktes keine komplette Packungsgruppe 4 gebildet werden kann, so wird das längsfördernde Kammernband 26a mit einer unbelegten Kammer 28 weitergefahren (Leerhub). Es ist deshalb ein Aufnehmer 43 vorgesehen zur Erfassung des Füllungszustandes der jeweiligen Kammer 14 des Kammernbandes 12a, der ein Signal an eine Steuerung 44 abgibt, wenn die Kammer 14 nicht rechtzeitig mit einer kompletten Packungsgruppe 4 gefüllt werden kann. Das Kammernband 26a führt in jedem Falle bei jedem Takt des Stangenpackers 3 einen Hub aus, entweder mit gefüllten Kammern 28 (komplette Packungsgruppe 4) oder mit einer leeren Kammer 28 (Leerhub). Dabei wird die jeweils ankommende Kammer 28 über einen Aufnehmer 46 abgefragt, ob sie gefüllt ist oder nicht. Bei nicht gefüllter Kammer 28 gibt der Aufnehmer 46 ein Signal an die Steuerung 44 ab, und es wird die Blankettzufuhr aus der Blankettzuführeinrichtung 47, die ein entsprechendes Signal von der Steuerung 44 erhält, gestoppt, d. h., es gelangt kein Blankett 34 vor die leere Kammer 28. Der Stangenpacker 3 läuft dabei aber weiter und beendet den Faltvorgang an der letzten Packungsgruppe. Alternativ kann natürlich, wie an anderer Stelle bereits erwähnt, aus der Nachlegestation 39 eine komplette Packungsgruppe 4 in eine signalisierte leere Kammer 28 eingeschoben werden, wobei dann natürlich eine Unterbrechung der Blankettzufuhr entfällt. Die Nachlegestation 39 erhält in diesem Falle von der Steuerung 44 ein entsprechendes Einschubsignal, was in der Fig. 2 strichliniert angegeben ist. Das längsfördernde Kammernband 26a darf nur jeweils dann um einen Hub weitergefahren werden, wenn sich der Schieber 33 in seiner zurückgezogenen Stellung außerhalb der Packungsbahn befindet, so daß er das Kammernband 26a nicht blockiert, und wenn sich das querfördernde Kammernband 12a in einer Rastphase befindet. Das querfördernde Kammernband 12a darf nur jeweils dann um einen Hub weitergefahren werden, wenn sich das längsfördernde Kammernband 26a in einer Rastphase befindet und wenn der Schieber 16 die letzten beiden übereinanderliegenden Einzelpackungen 2 einer Packungsgruppe 4 in die Kammern 14 des Kammernbandes 12a eingeschoben hat. Das erste aus zwei übereinanderliegenden Einzelpackungen 2 bestehende Doppelpaket der nächsten Packungsgruppe 4 darf jedoch das Kammernband 12a noch nicht erreicht haben. Die separaten Antriebsmotoren 37 und 38 für die beiden Kammernbänder 12a und 26a sind entsprechend über die genannte Steuerung 44 ansteuerbar. Die Steuerung der beschriebenen Funktionen kann auch über ein Programm mittels eines Computers erfolgen.

**Patentansprüche**

1. Verfahren zum gruppenweisen Verpacken von Einzelpackungen, insbesondere von Zigarettenpackungen, bei dem in einer Station durch Zuführen von Einzelpackungen (2) Packungsgruppen (4) einer bestimmten Anzahl von Einzelpackungen (2) gebildet, die Packungsgruppen (4) aus der Gruppenbildungsstation entlang einer Förderstrecke einer einer Verpackungsmaschine zugeordneten Überführungsposition zugeführt und taktweise aus der Überführungsposition in die Verpackungsmaschine übergeben werden, dadurch gekennzeichnet, daß komplette Packungsgruppen mit einem ersten Förderschritt aus der Gruppenbildungsstation zunächst in eine Zwischenposition gefördert werden, daß sie mit einem zweiten Förderschritt aus der Zwischenposition der Überführungsposition zugeführt werden.

2. Verfahren nach Anspruch 1, dadurch gekennzeichnet, daß der zweite Förderschritt in der Packungsgruppenzuführung zur Maschine (3) als Leerhub durchgeführt wird, wenn nicht rechtzeitig zum entsprechenden Arbeitstakt der Maschine (3) eine komplette Packungsgruppe (4) gebildet und in die Zwischenposition gefördert werden kann.

3. Verfahren nach Anspruch 2, dadurch gekennzeichnet, daß die Zufuhr eines zur Umhüllung einer komplatten Packungsgruppe (4) erforderlichen Blanketts (34) gestoppt wird, wenn infolge eines Leerhubs in der Packungsgruppenzuführung keine Packungsgruppe in die Überführungsposition gelangt ist.

4. Verfahren nach Anspruch 1, dadurch gekennzeichnet, daß zur Vermeidung eines Leerhubes bei der Übergabe der Packungsgruppen aus der Überführungsposition zur Maschine (3) eine fehlende Packungsgruppe (4) durch Nachlegen einer kompletten Packungsgruppe aus einem Vorrat ersetzt wird

5. Vorrichtung zum gruppenweisen Verpacken von Einzelpackungen, insbesondere von Zigarettenpackungen, mit einem intermittierend umlaufenden Förderer mit Aufnahmekammern für Packungsgruppen, Mitteln (14, 16, 19) zum Bilden von Packungsgruppen (4) in den Aufnahmekammern durch Zuführen einer bestimmten Anzahl von Einzelpackungen (2), Mitteln (12, 14, 26, 28) zum Überführen dieser Packungsgruppen (4) entlang einer Förderstrecke zu einer einer Verpackungsmaschine (3) zugeordneten Überführungsstation und Mitteln zum taktweisen Übergeben der Packungsgruppen aus der Überführungsstation in die Verpackungsmaschine, dadurch gekennzeichnet, daß ein zweiter intermittierend umlaufender Förderer (26) mit Aufnahmekammern (28) für Packungsgruppen (4) vorgesehen ist, daß die Förderbahnen der beiden Förderer (12 und 26) sich kreuzen und daß sich jeweils eine Kammer (14 bzw. 28) des einen Förderers (12 bzw. 26) in eine Kammer (28 bzw. 14) des anderen, zur Zeit in Ruhe befindlichen Förderers (26 bzw. 12) bewegt, wobei der zweite Förderer die Packungsgruppen (4) vom ersten Förderer (12) übernimmt und zur Überführungsstation fördert.

6. Vorrichtung nach Anspruch 5, dadurch gekennzeichnet, daß der erste und der zweite Förderer (12 bzw. 26) als Kammernbänder (12a bzw. 26a) ausgebildet sind.

7. Vorrichtung nach Anspruch 5 oder 6, dadurch gekennzeichnet, daß zum Füllen jeweils einer Kammer (14) des ersten Förderers (12) mit einer Packungsgruppe (4) ein die zugeführten Einzelpackungen (2) taktweise nacheinander in die Kammer (14) einschiebender Schieber (16) vorgesehen ist.

8. Vorrichtung nach einem der Ansprüche 5 bis 7, dadurch gekennzeichnet, daß die Kammern (14) und der Schieber (16) zur Aufnahme bzw. zum Einschieben jeweils zweier übereinanderliegender Einzelpackungen (2) je Einschub ausgebildet ist.

9. Vorrichtung nach einem der Ansprüche 5 bis 8, dadurch gekennzeichnet, daß Abstützmittel (19) vorgesehen sind für die in die Kammer (14) eingeschobenen Einzelpackungen (2), welche zumindest annähernd synchron zur Einschubbewegung des Schiebers (16) schrittweise um jeweils eine Packungsbreite in der Einschubrichtung bewegbar sind.

10. Vorrichtung nach Anspruch 9, dadurch gekennzeichnet, daß die Abstützmittel (19) aus mindestens einem an einem angetriebenen Zahnriemen (21) befestigten Anschlag (19a bzw. 19b) bestehen.

11. Vorrichtung nach Anspruch 10, dadurch gekennzeichnet, daß zwei Anschläge (19a, 19b) am Zahnriemen (21) in einem solchen Abstand angeordnet sind, daß diese wechselweise für die Bildung jeweils einer Packungsgruppe (4) zum Einsatz kommen.

12. Vorrichtung nach einem der Ansprüche 5 bis 11, dadurch gekennzeichnet, daß zum Zuführen der Einzelpackungen (2) zu dem diese in die Kammern (14) des ersten Förderers (12) einschiebenden Schieber (16) ein Zuführband (6) vorgesehen ist, dem ein Hubelement (9) zugeordnet ist zum Abheben der Einzelpackungen (2) vom Zuführband (6) und zu deren Befördern in einen senkrecht zum Zuführband (6) angeordneten Packungsturm (8).

13. Vorrichtung nach Anspruch 12, dadurch gekennzeichnet, daß zum Auswurf von fehlerhaften Einzelpackungen (2) das Hubelement (9) stillsetzbar und die auszuwerfende Packung unter dem Packungsturm (8) hindurch mittels des Zuführbandes (6) in einen Auffangbehälter (24) förderbar sind.

14. Vorrichtung nach einem oder mehreren der Ansprüche 5 bis 13, dadurch gekennzeichnet, daß Mittel (43) vorgesehen sind zur Erfassung des Füllungszustandes einer Kammer (14) des ersten Förderers (12) mit Packungen (2) und zur Signalabgabe an eine Steuerung (44), wenn die Kammer (14) nicht rechtzeitig zum nächsten Arbeitstakt des zweiten Förderers (26) mit einer kompletten Packungsgruppe (4) gefüllt werden kann.

15. Vorrichtung nach einem oder mehreren der Ansprüche 5 bis 14, dadurch gekennzeichnet, daß mit der Steuerung (44) ansteuerbare separate Antriebsmotoren (37 und 38) für den schrittweisen Antrieb des ersten Förderers (12) und des zweiten Förderers 26 vorgesehen sind, so daß der erste Förderer (12) bei nicht rechtzeitig mit einer kompletten Packungsgruppe (4) gefüllter Kammer (14) stillsetzbar ist und der zweite Förderer (26) einen Leerhub mit einer ungefüllten Kammer (28) ausführt.

16. Vorrichtung nach Anspruch 15, dadurch gekennzeichnet, daß Mittel (46) vorgesehen sind zum Erfassen des Füllungszustandes der Kammern (28) des zweiten Förderers (26) und zur Signalabgabe an die Steuerung (44), wenn ein Leerhub mit einer ungefüllten Kammer (28) erfolgt.

17. Vorrichtung nch Anspruch 16, dadurch gekennzeichnet, daß in Abhängigkeit von einem Leersignal für eine ungefüllte Kammer (28) die Zufuhr eines Blanketts (34) aus einer Blankettzuführeinrichtung (47) unterbrechbar ist.

18. Vorrichtung nach Anspruch 16, dadurch gekennzeichnet, daß in Abhängigkeit von einem Leersignal für eine ungefüllte Kammer (28) eine komplette Packungsgruppe (4) aus einer an der Förderstrecke des zweiten Förderers (26) vorgesehenen Nachlegestation (39) in diese ungefüllte Kammer (28) einschiebbar ist.

## Claims

1. Process for packing individual packs, in particular cigarette packs, in groups, in which pack groups (4) of a specific number of individual packs (2) are formed in a station by supplying individual packs (2), the pack groups (4) from the group-forming station are supplied along a conveying section to a transfer position associated with a packing machine and are delivered in pulsed manner from the transfer position to the packing machine, characterized in that complete pack groups are first conveyed, in a first conveying step, from the group-forming station into an intermediate position, and in that they are supplied, in a second conveying step, from the intermediate position to the transfer position.

2. Process according to Claim 1, characterized in that the second conveying step in the supply of pack groups to the machine (3) is carried out as a dummy stroke if a complete pack group (4) cannot be formed and conveyed into the intermediate position in time with the corresponding operating cycle of the machine (3).

3. Process according to Claim 2, characterized in that the supply of a blank (34) required for wrapping a complete pack group (4) is stopped if no pack group has passed into the transfer position as a result of a dummy stroke in the supply of pack groups.

4. Process according to Claim 1, characterized in that in order to avoid a dummy stroke on delivering the pack groups from the transfer position to the machine (3) the gap left by a missing pack group (4) is filled by putting in a complete pack group from a supply.

5. Apparatus for packing individual packs, in particular cigarette packs, in groups, having a conveyor which circulates intermittently and has receiving compartments for pack groups, means (14, 16, 19) for forming pack groups (4) in the receiving compartments by supplying a specific number of individual packs (2), means (12, 14, 26, 28) for transferring these pack groups (4) along a conveying section to a transfer station associated with a packing machine (3), and means for delivering the pack groups in pulsed manner from the transfer station to the packing machine, characterized in that there is provided a second conveyor (26) which circulates intermittently and has receiving compartments (28) for pack groups (4), in that the conveying paths of the two conveyors (12 and 26) intersect one another, and in that a respective compartment (14 and 28 respectively) of one conveyor (12 and 26 respectively) moves into a compartment (28 and 14 respectively) of the other conveyor (26 and 12 respectively) which is at rest at the time, the second conveyor taking up the pack groups (4) from the first conveyor (12) and conveying them to the transfer station.

6. Apparatus according to Claim 5, characterized in that the first and the second conveyor (12 and 26 respectively) are constructed as belts (12a and 26a respectively) with compartments.

7. Apparatus according to Claim 5 or 6, characterized in that there is provided, for filling a respective compartment (14) of the first conveyor (12) with a pack group (4), a pusher means (16) which pushes the supplied individual packs (2) in pulsed manner one after the other into the compartment (14).

8. Apparatus according to one of Claims 5 to 7, characterized in that the compartments (14) and the pusher means (16) are constructed for receiving or pushing in in each case two individual packs (2) lying on top of one another for each push.

9. Apparatus according to one of Claims 5 to 8, characterized in that there are provided support means (19) for the individual packs (2) pushed into the compartment (14), which support means (19) may be moved in the direction of pushing in at least approximately in synchronism with the pushing-in movement of the pusher means (16) in steps by one pack width in each case.

10. Apparatus according to Claim 9, characterized in that the support means (19) comprise at least one stop (19a and 19b respectively) secured to a driven toothed belt (21).

11. Apparatus according to Claim 10, characterized in that two stops (19a, 19b) are arranged on the toothed belt (21) at a spacing such that they are used alternately for forming a respective pack group (4).

12. Apparatus according to one of Claims 5 to 11, characterized in that there is provided, for supplying the individual packs (2) to the pusher means (16) pushing them into the compartments (14) of the first conveyor (12), a supply belt (6) with which there is associated a lifting element (9) for lifting the individual packs (2) from the supply belt (6) and for conveying them to a pack tower (8) arranged perpendicularly with respect to the supply belt (6).

13. Apparatus according to Claim 12, characterized in that the lifting element (9) may be brought to a standstill for ejecting defective individual packs (2), and the pack to be ejected may be conveyed through below the pack tower (8) by means of the supply belt (6) to a collecting container (24).

14. Apparatus according to one or more of Claims 5 to 13, characterized in that there are provided means (43) for detecting the level to which a compartment (14) of the first conveyor (12) is filled with packs (2) and for emitting a signal to a control (44) if the compartment (14) cannot be filled with a complete pack group (4) in time for the next operating cycle of the second conveyor (26).

15. Apparatus according to one or more of Claims 5 to 14, characterized in that there are provided separate drive motors (37 and 38), controllable by the control (44), for driving in steps the first conveyor (12) and the second conveyor 26, so that the first conveyor (12) may be brought to a standstill when a compartment (14) is not filled with a complete pack group (4) in time and the second conveyor (26) carries out a dummy stroke with an unfilled compartment (28).

16. Apparatus according to Claim 15, characterized in that there are provided means (46) for detecting the level to which the compartments (28) of the second conveyor (26) are filled and for emitting a signal to the control (44) if a dummy stroke is carried out with an unfilled compartment (28).

17. Apparatus according to Claim 16, characterized in that the supply of a blank (34) from a blank supplying device (47) may be interrupted as a function of an empty signal for an unfilled compartment (28).

18. Apparatus according to Claim 16, characterized in that a complete pack group (4) from a replenishing station (39) provided on the conveying section of the second conveyor (26) may be pushed, as a function of an empty signal for an unfilled compartment (28), into said unfilled compartment (28).

## Revendications

1. Procédé pour l'emballage groupé d'emballages individuels, notamment de paquets de cigarettes, dans lequel, dans un poste sont formés, par amenée d'emballages individuels (2), des groupes d'emballage (4) d'un nombre déterminé d'emballages individuels (2), les groupes d'emballage (4) sont amenés hors du poste de formation de groupes, le long d'une voie de transport, à une position de transfert associée à une machine d'emballage, et sont délivrés, de manière cyclique, hors de la position de transfert, dans la machine d'emballage, caractérisé en ce que des groupes d'emballage complets sont tout d'abord transportés hors du poste de formation de groupes dans une position intermédiaire, avec un premier pas de transport, et en ce qu'ils sont amenés hors de la position intermédiaire à la position de transfert avec un second pas de transport.

2. Procédé selon la revendication 1, caractérisé en ce que le second pas de transport dans l'amenée de groupes d'emballage à la machine (3), est exécuté sous forme de course à vide, lorsqu'il est impossible de former un groupe d'emballage complet (4) et de le transporter dans la position intermédiaire, à temps pour le cycle de travail correspondant de la machine (3).

3. Procédé selon la revendication 2, caractérisé en ce que l'amenée d'un flan d'emballage (34) nécessaire pour envelopper un groupe d'emballage complet (4), est stoppée, lorsqu'à la suite d'une course à vide dans l'amenée de groupes d'emballage, aucun groupe d'emballage n'est parvenu dans la position de transfert.

4. Procédé selon la revendication 1, caractérisé en ce que pour éviter une course à vide lors de la délivrance des groupes d'emballage hors de la position de transfert vers la machine (3), un groupe d'emballage (4) manquant est remplacé par la dépose de complément d'un groupe d'emballage complet en provenance d'une réserve.

5. Dispositif pour l'emballage groupé d'emballages individuels, notamment de paquets de cigarettes, comportant un transporteur à marche intermittente et à chambres de réception pour des groupes d'emballage, des moyens (14, 16, 19) pour former des groupes d'emballage (4) dans les chambres de réception par l'amenée d'un nombre déterminé d'emballages individuels (2), des moyens (12, 14, 26, 28) pour transférer ces groupes d'emballage (4) le long d'une voie de transport, vers un poste de transfert associé à une machine d'emballage (3), et des moyens pour délivrer de manière cyclique les groupes d'emballage hors du poste de transfert dans la machine d'emballage, caractérisé en ce qu'il est prévu un second transporteur (26) à marche intermittente et à chambres de réception (28) pour des groupes d'emballage (4), en ce que les voies de transport des deux transporteurs (12 et 26) se croisent, et en ce qu'une chambre (14 ou 28) de l'un des transporteurs (12 ou 26) se déplace à chaque fois dans une chambre (28 ou 14) de l'autre transporteur (26 ou 12) se trouvant à cet instant au repos, le second transporteur recevant les groupes d'emballage (4) du premier transporteur (12) et les transportant au poste de transfert.

6. Dispositif selon la revendication 5, caractérisé en ce que le premier et le second transporteur (12 et 26) sont réalisés en tant que bandes à chambres (12a et 26a).

7. Dispositif selon la revendication 5 ou 6, caractérisé en ce que pour le remplissage de chaque chambre (14) du premier transporteur (12) avec un groupe d'emballage (4), il est prévu un coulisseau (16) qui introduit en glissant les emballages individuels (2) de manière successive et cyclique, dans la chambre (14).

8. Dispositif selon l'une des revendications 5 à 7, caractérisé en ce que les chambres (14) et le coulisseau (16) sont conçus pour respectivement recevoir et introduire en glissant à chaque fois deux emballages individuels (2) superposés, à chaque insertion en glissant.

9. Dispositif selon l'une quelconque des revendications 5 à 8, caractérisé en ce que sont prévus des moyens d'appui (19) pour les emballages individuels (2) insérés en glissant dans les chambres (14), qui sont déplaçables pas à pas dans la direction de l'insertion, de manière au moins approximativement synchronisée avec le mouvement d'insertion du coulisseau (16), de chaque fois une largeur d'un emballage dans la direction d'insertion.

10. Dispositif selon la revendication 9, caractérisé en ce que les moyens d'appui (19) sont constitués par au moins une butée (19a, 19b) fixée à une courroie crantée (21) entraînée.

11. Dispositif selon la revendication 10, caractérisé en ce que deux butées (19a, 19b) sont disposées à la courroie crantée (21) en présentant un espacement tel, que ces butées entrent en action alternativement pour la formation chaque fois d'un groupe d'emballage (4).

**12.** Dispositif selon l'une des revendications 5 à 11, caractérisé en ce que pour amener les emballages individuels (2) au coulisseau (16) qui les insère dans les chambres (14) du premier transporteur (12), il est prévu une bande d'alimentation (6) à laquelle est associé un élément de levage (9) pour soulever les emballages individuels (2) de la bande d'alimentation (6) et pour leur transport dans une tour d'emballages (8) disposée perpendiculairement à la bande d'alimentation (6).

**13.** Dispositif selon la revendication 12, caractérisé en ce que pour l'éjection d'emballages individuels (2) défectueux, l'élément de levage (9) peut être mis à l'arrêt, les emballages à éjecter pouvant être transportés par la bande d'alimentation (6) vers un récipient de collecte (24), en passant sous la tour d'emballage (8).

**14.** Dispositif selon l'une ou plusieurs des revendications 5 à 13, caractérisé en ce que sont prévus des moyens (43) pour détecter l'état de remplissage avec des emballages (2), d'une chambre (14) du premier transporteur (12), et pour délivrer un signal à une commande (44) lorsque la chambre (14) ne peut être remplie à temps avec un groupe d'emballage (4) complet, pour le prochain cycle de travail du second transporteur (26).

**15.** Dispositif selon l'une ou plusieurs des revendications 5 à 14, caractérisé en ce que sont prévus des moteurs d'entraînement (37 et 38) séparés pouvant être pilotés avec la commande (44) et destinés à l'entraînement pas à pas du premier transporteur (12) et du second transporteur (26), de sorte que le premier transporteur (12) est arrêté dans le cas d'une chambre (14) non remplie à temps avec un groupe d'emballage complet (4) et que le second transporteur (26) effectue une course à vide avec une chambre (28) non remplie.

**16.** Dispositif selon la revendication 15, caractérisé en ce que sont prévus des moyens (46) pour détecter l'état de remplissage de la chambre (28) du second transporteur (26) et pour délivrer un signal à la commande (44) lorsque s'effectue une course à vide avec une chambre (28) non remplie.

**17.** Dispositif selon la revendication 16, caractérisé en ce qu'en fonction d'un signal de vide pour une chambre (28) non remplie, l'amenée d'un flan d'emballage (34) hors d'un dispositif d'alimentation en flans d'emballages (47) peut être interrompue.

**18.** Dispositif selon la revendication 16, carctérisé en ce qu'en fonction d'un signal de vide pour une chambre (28) non remplie, un groupe d'emballage complet (4) peut être inséré dans cette chambre non remplie (28), à partir d'un poste de dépose de complément (39) prévu à la voie de transport du second transporteur (26).

Fig. 1

Fig. 2

## Fig. 3